(19) Europäisches Patentamt
European Patent Office
Office européen des brevets

(11) Veröffentlichungsnummer: **0 165 556**
**B1**

(12) # EUROPÄISCHE PATENTSCHRIFT

(45) Veröffentlichungstag der Patentschrift: **13.09.89**

(51) Int. Cl.⁴: **C 09 D 5/44**

(21) Anmeldenummer: **85107306.4**

(22) Anmeldetag: **13.06.85**

(54) **Hitzehärtbares Überzugsmittel, seine Verwendung, bzw. Verfahren zu seiner Herstellung.**

(30) Priorität: **16.06.84 DE 3422473**

(43) Veröffentlichungstag der Anmeldung: **27.12.85 Patentblatt 85/52**

(45) Bekanntmachung des Hinweises auf die Patenterteilung: **13.09.89 Patentblatt 89/37**

(84) Benannte Vertragsstaaten: **AT BE CH DE FR GB IT LI NL SE**

(56) Entgegenhaltungen:
**EP-A-0 004 090**
**US-A-4 064 090**

(73) Patentinhaber: **BASF Aktiengesellschaft, Carl-Bosch- Strasse 38, D-6700 Ludwigshafen (DE)**

(72) Erfinder: **Kempter, Fritz Erdmann, Dr., L 2,14, D-6800 Mannheim (DE)**
Erfinder: **Petersen, Harro, Dr. Dipl.- Ing., Kalmitstrasse 23, D-6710 Frankenthal (DE)**
Erfinder: **Schupp, Eberhard, Dr., Tilsiter Weg 4, D-6830 Schwetzingen (DE)**
Erfinder: **Sabelus, Guenther, Dr. Dipl.- Ing., Neustadter Strasse 25, D-6715 Lambsheim (DE)**
Erfinder: **Schmidt, Horst, Dr., Kopernikusstrasse 56, D-6800 Mannheim 1 (DE)**

**EP 0 165 556 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft hitzehärtbare wäßrige Überzugsmittel bzw. ein Verfahren zu ihrer Herstellung, die mit Amino- und Phenoplasten gehärtet werden und insbesondere für die kathodische Elektrotauchlackierung von Metallteilen geeignet sind.

Systeme mit derartigen Vernetzungsmitteln sind zwar beschrieben worden, haben jedoch bisher nicht die praktische Verwendbarkeit erlangt, die aufgrund der großen Zahl zur Verfügung stehender Amino- und Phenoplastharze hätte erwartet werden können.

In der DE-OS-2 737 375 werden Umsetzungsprodukte aus Polyepoxidharzen mit Polyaminen beschrieben, die pro Mol des Adduktes mit mindestens 2 Molen eines Monoepoxides oder Monocarbonsäure (Kettenlänge $C_8$ bis $C_{24}$) umgesetzt werden, wobei Monoepoxide bevorzugt sind. Als Vernetzungsmittel dienen Amino- und Phenoplaste. Die hier angegebenen Einbrennbedingungen betragen 30 Minuten/190°C.

In der DE-OS-2 426 996 sind Abscheidungsbäder für die kathodische Elektrotauchlackierung beschrieben, die aus Umsetzungsprodukten eines Diepoxidharzes mit poly- und mono-funktionellen Aminen hergestellt sind, wobei die polyfunktionellen Amine als Kupplungsmittel und die monofunktionellen Amine als Abbruchmittel wirken. Als Vernetzungsmittel dienen ebenfalls Amino- und Phenoplasten.

Gemäß DE-OS-2 936 356 werden präkondensierte hitzehärtbare Überzugsmittel aus primäre und/oder sekundäre und gegebenenfalls tertiäre Aminogruppen enthaltenden Bindemitteln mit Vernetzungsmitteln erhalten, die endständig COOH-Gruppen aufweisen sowie teilweise mit Monoalkoholen verestert sind (Esterzahl $> 30$) und die im neutralen Bereich stabil, im basischen Medium gegen Aminogruppen reaktionsfähig sind.

In der DE-OS-2 936 411 werden selbstvernetzende hitzehärtbare wäßrige Überzugsmittel beschrieben, die primäre und/oder sekundäre und gegebenenfalls auch tertiäre Aminogruppen, sowie endständige veresterte Carboxylgruppen enthaltende Kunstharze enthalten. In einigen Beispielen wird die Mitverwendung handelsüblicher Phenolharze angeführt.

Die EP-004 090 betrifft kathodisch abscheidbare wäßrige Elektrotauchlack-Überzugsmittel, die als Aminogruppen enthaltende organische Kunstharz-Bindemittel in Kombination mit einem Vernetzungsmittel, das veresterte endständige Carboxylgruppen aufweist, beschrieben sind.

Aus der DE-OS-3 014 290 sind Epoxidharz/Amin Addukte bekannt, die mit Monoacrylaten copolymerisiert werden. Acrylsäure ist als Comonomeres erwähnt. Die Produkte werden mit Amino- und Phenoplasten präkondensiert.

Die US-PS-3 716 402 bezieht sich auf Reaktionsprodukte von polyfunktionalen Epoxiden mit primären Aminen mit Polycarbonsäuren oder Anhydriden, in einigen Fällen in Kombination mit einem Aminoplastharz.

Durch die DE-OS-2 805 936 sind Carboxylgruppen enthaltende kationische Bindemittel bzw. Bindemittelkombinationen bekannt. Als Vernetzer dienen Amino- und Phenoplaste, die für den Fall, daß sie nicht wasserlöslich sind, mit den Bindemitteln präkondensiert werden.

In der DE-OS-3 008 810 sind schließlich selbstvernetzende Bindemittel aus primäre und/oder sekundäre Aminogruppen enthaltenden Umsetzungsprodukten von Epoxidverbindungen, halb oder teilblockierten Di- oder Polyisocyanaten und gegebenenfalls Polyaminen, die Oxazolidingruppen aufweisen, beschrieben.

Aufgabe der vorliegenden Erfindung ist es, ein Bindemittel bereitzustellen, das mit den handelsüblichen Amino- und Phenoplasten in mindestens einem 2-Komponenten-System die verschiedenen Einsatzmöglichkeiten eines kataphoretischen Beschichtungssystems z. B. Grundierung, Industrielacke (eingeschloßen Weiß- und Silberlacke) abzudecken in der Lage ist. Diese Aufgabenstellung schließt ein, daß die wäßrigen Überzugsmittel im pH-Bereich von 7 bis 8 einwandfrei zu dispergieren sind, die notwendigen Härtungstemperaturen möglichst niedrig liegen (um 160°C) und daß die Überzugsmittel besonders gute Umgriffeigenschaften, sowie Elastizitätseigenschaften auch beim sogenannten "Unterbrennen" an Teilen des Werkstückes, die die vorgesehene Einbrenntemperatur nicht erreichen, aufweisen.

Diese Aufgabe wird durch die in den Ansprüchen definierten hitzehärtbaren Überzugsmittel in vorteilhafter Weise gelöst.

Gegenstand der vorliegenden Erfindung ist ein hitzhärtbares Überzugsmittel, enthaltend eine Kombination aus einem stickstoffbasischen, durch Protonieren mit Säure wasserverdünnbaren Bindemittel und einem Vernetzungsmittel, sowie gegebenenfalls Pigmente, Füllstoffe, Korrosionsinhibitoren, Lackhilfsmittel, Katalysatoren und in einer Menge von bis zu 40 %, bezogen auf das Gesamtgewicht des Überzugsmittels organische Lösungsmittel, das dadurch gekennzeichnet ist, daß als stickstoffbasisches Bindemittel ein Umsetzungsprodukt einer Dicarbonsäure und/oder eines Dicarbonsäureesters, wobei der Dicarbonsäure(ester) gegebenenfalls teilweise durch eine Monocarbonsäure und/oder einen Monocarbonsäureester ersetzt sein kann, oder eines (Meth-)acrylsäureester-Oligomeren oder -Polymeren mit einem Addukt aus einem Di- oder Triglycidylether und einem Poly-Amin, wobei das Polyamin mindestens 2 Aminstickstoffe pro Molekül und mindestens eine Alkylenkette mit mindestens 3 Kohlenstoffatomen zwischen den Aminogruppen enthält, eingesetzt wird, mit der Maßgabe, daß für die Herstellung des Di- oder Triglycidylether/Polyamin-Adduktes auf ein Epoxidäquivalent des Di- oder Triglycidylethers 2 bis 10 NH-Äquivalente des Polyamins eingesetzt werden, das stickstoffbasische Bindemittel eine NH-Aminzahl von 50 bis 150 mg KOH/g sowie eine Viskosität von 1 bis 6000 mPa.s, gemessen bei 150°C an einer Lösung mit einem Festgehalt von 88 $\pm$ 1 % in Isodekanol aufweist und mit Amino- und/oder Phenoplasten als Vernetzungsmittel kombiniert wird.

Bevorzugt als Polyamin für die Herstellung des Di- oder Triglycidylether/Polyamin-adduktes sind n-Hexan-1,6-diamin, 4,7-Dioxadecan-1,10-diamin und 4,9-Dioxadodecan-1,12-diamin.

Gegenstand der vorliegenden Erfindung ist außerdem die Verwendung der erfindungsgemäßen Überzugsmittel nach Protonierung mit Säure als Bindemittel für die kathodische Elektrotauchlackierung von Metallteilen.

Die als Vernetzungsmittel dienenden Amino- und/oder Phenoplaste werden im allgemeinen in Mengen von 20 bis 50 Gew.-% mit dem stickstoffbasischen Bindemittel kombiniert.

Die in den oben angeführten Druckschriften DE-OS-2 737 375, DE-OS-2 936 356, EP-004 090 und DE-OS-3 080 810 beschriebenen Epoxid/Amin-Addukte aus z. B. dem Glycidylether des Bisphenols A und primären Diaminen sind seit langem bekannte Verbindungen und werden z. B. als Epoxidhärter eingesetzt. Produkte, die mit Monocarbonsäuren ab einer Kettenlänge von $C_8$ umgesetzt sind, werden in der DE-OS-2 737 375 beschrieben. Im Rahmen des in der DE-OS-3 080 810 beschriebenen Herstellungsverfahrens für selbstvernetzende Bindemittel, die Urethangruppen aufweisen, sind auch Umsetzungsprodukte mit Dicarbonsäuren erwähnt. Gleichwohl wird die spezielle Kombination der Merkmale, wie sie die in der vorliegenden Erfindung beanspruchten Überzugsmittel aufweisen müssen und die damit erzielten Vorteile durch keine dieser Druckschriften nahegelegt.

Die Verwendung von Di- und Polyaminen mit einer $C_2$-Alkylenkette zwischen den Aminogruppen wie z. B. Ethylendiamin oder Diethylentriamin, ist im Rahmen der vorliegenden Erfindung ausdrücklich nicht vorgesehen. Derartige Produkte ergeben wäßrige Zubereitungen, deren Stabilitätseigenschaften hinsichtlich Dispersionsstabilität in Kombination mit Phenoplasten zu ungenügenden Ergebnissen führen. Noch deutlicher wird das im Hinblick auf Badstabilitätseigenschaften in Kombination mit speziellen Melaminharze, wo es zu völlig unakzeptablen pH-Wert-Absenkungen während der Alterung der Bäder kommt. Überdies wurde festgestellt, daß derartige Produkte, verglichen mit den erfindungsgemäßen Überzugsmitteln wesentlich niedrigere Bad-pH-Werte aufweisen und schon deshalb für den angestrebten Einsatz in dem wünschenswerten pH-Bereich von 7 bis 8 nicht in Frage kommen.

Zu den Aufbaukomponenten der erfindungsgemäßen Überzugsmittel ist im einzelnen folgendes auszuführen.

Das erfindungsgemäße wäßrige Überzugsmittel wird aus dem Umsetzungsprodukt eines Adduktes aus Polyepoxidharz und Di- oder Polyamin, das mindestens eine C-3-Alkylenkette zwischen den Aminogruppen enthält, und einer Dicarbonsäure bzw. ihrem Ester gegebenenfalls im Gemisch mit untergeordneten Mengen einer Monocarbonsäure bzw. ihres Esters und/oder eines oligomeren oder polymeren Acrylsäureesters oder Methacrylsäureesters hergestellt und mit Amino- und/oder Phenoplasten als Vernetzungsmittel kombiniert.

Das Polyamin enthält pro Molekül mindestens zwei Amin-Stickstoffatome und mindestens drei Kohlenstoffatome zwischen den Aminogruppen, sowie vorzugsweise zwei primäre Aminogruppen bzw. mindestens vier Amin-Wasserstoffatome. Im allgemeinen werden höchstens ein Mol des Amins mit jeder Epoxidgruppe des Polyepoxidharzes umgesetzt. Die Umsetzung mit der Dicarbonsäure bzw. ihrem Ester, gegebenenfalls im Gemisch mit einer Monocarbonsäure bzw. ihrem Ester und/oder eines oligomeren oder polymeren Acrylates oder Methacrylates wird so geführt, daß das Umsetzungsprodukt eine NH-Aminzahl von 50 bis 150 mg KOH/g, bevorzugt von 100 bis 130 mg KOH/g, bezogen auf stickstoffbasisches Bindemittel (fest, ohne Vernetzungsmittel) aufweist.

Die Menge an tertiärem Stickstoff soll so gering wie möglich gehalten werden. Bei den erfindungsgemäßen Bindemitteln wird dieser Gehalt im wesentlichen durch die Menge an überschüßigem Amin, das mit dem Epoxidharz zur Reaktion gebracht wird, bestimmt, wobei auf ein Epoxidäquivalent des Di- oder Triglycidylethers 2,0 bis 10,0, bevorzugt 2,5 bis 8 NH-Äquivalente des Polyamins eingesetzt werden. Im allgemeinen liegt der Gesamtstickstoffgehalt bei ungefähr 5 %, bezogen auf die Epoxid/Amin-Addukte, der Gehalt an tertiärem Amin bei < 0,5 %.

Die Zusammensetzung des Epoxid-Amin-Adduktes (= EA) kann durch folgende Formeln wiedergegeben werden:

B - A - B
B - A - B - A - B

Die Bindemittelzusammensetzung wird im wesentlichen durch die nachstehend angegebenen Formeln beschrieben:

EA - C - EA
EA - C - EA - C - EA
EA - C - EA - C - EA - D

in denen
A den Rest eines Epoxidharzes,
B den Rest eines Polyamins bzw. Diamins,
EA den Rest eines Epoxid/Amin-Adduktes,
C den Rest einer Dicarbonsäure bzw. eines oligomeren oder polymeren Acrylates und
D gegebenenfalls den Rest einer Monocarbonsäure darstellt,
wobei über tertiäre Stickstoffatome sowie über anteilig vorhandene Tricarbonsäuren z. B. in Dimerfettsäuren

sowie Oligomere oder Polyacrylate Verzweigungen möglich sind. Die gegebenenfalls mitzuverwendenden Monocarbonsäuren dienen als sog. Kettenabbrecher, z. B. zur Einhaltung des angestrebten Viskositätsbereichs der Bindemittel von 1 bis 6000 mPa.s vorzugsweise 500 bis 5000 mPa.s, gemessen bei 150°C an einer Lösung mit einem Feststoffgehalt (nach DIN 53 216) von 88 ± 1 % in Isodecanol, mit einem ICI-Platte-Kegel-Viskosimeter.

Als Di- oder Triglycidylether zur Herstellung des Di- oder Triglycidylether/Polyamin-Adduktes eignen sich die üblichen Glycidylpolyether von mehrwertigen Phenolen, die mehr als eine, bis zu drei, vorzugsweise zwei 1,2-Epoxidgruppen pro Molekül aufweisen. Derartige Polyepoxidharze leiten sich von einem Epihalogenhydrin und einem mindestens zweiwertigen Phenol ab und besitzen ein Epoxidäquivalentgewicht von etwa 190 bis etwa 4000, vorzugsweise bis 2500. Spezielle Beispiele für geeignete Epihalogenhydrine sind Epichlorhydrin, Epibromhydrin und Epijodhydrin, wobei Epichlorhydrin bevorzugt wird. Spezielle Beispiele für zweiwertige Phenole (Diphenole) sind Resorcin, Hydrochinon, p,p'-Dihydroxyphenylpropan (Bisphenol A), p,p'-Dihydroxybenzophenon, p,p'-Dihydroxydiphenyl, p,p'-Dihydroxydiphenylethan, Bis-(2-hydroxynaphthyl)-methan, 1,5-Dihydroxynaphthylen und Novolacke; Bisphenol A wird bevorzugt. Diese Polyepoxidharze sind bekannt und werden im allgemeinen in den gewünschten Molekulargewichten durch Umsetzung des Epihalogenhydrins mit dem zweiwertigen Phenol in verschiedenen Mengenverhältnissen oder durch Umsetzung eines zweiwertigen Phenols mit einem Polyepoxidharz mit niedrigerem Molekulargewicht hergestellt. Besonders bevorzugte Polyepoxidharze sind Glycidylpolyether von Bisphenol A mit Epoxidäquivalentgewichten von etwa 190 bis etwa 2500.

Die erfindungsgemäß mit den Polyepoxidharzen umzusetzenden Polyamine sind vorzugsweise Diamine, insbesondere Amine mit 2 primären Aminogruppen pro Molekül und mindestens einer C-3-Alkylenkette. Die Diamine können aliphatisch oder cycloaliphatisch sein. Beispiele sind 1,3-Propylendiamin, 1,4-Butylendiamin, 1,5-Pentamethylendiamin, sowie das besonders bevorzugte Hexamethylendiamin, außerdem, 4,7,10-Trioxatridecan-1,13-diamin, 4,5-Dioxadecan-1,10-diamin, 4,9-Dioxadodecan-1,12-diamin, 4,4'-Methylenbiscyclohexanamin, 1,4-Cyclohexandiamin und Isophorondiamin. Aus der Reihe der Polyamine wäre z. B. Dipropylentriamin zu nennen.

Zur Herstellung der Di- oder Triglycidylether/Polyamin-Addukte werden die Epoxidharze mit dem Amin so umgesetzt, daß auf ein Epoxidäquivalent 2 bis 10, bevorzugt 2,5 bis 8,0 NH-Äquivalente eingesetzt werden, wobei im allgemeinen so verfahren wird, daß das Amin vorgelegt und das Epoxidharz in der Schmelze oder Lösung bei Temperaturen von 40 bis 150°C zugesetzt wird. Anschließend wird das überschüssige Amin entfernt. Dazu werden vorteilhaft die üblichen industriellen Möglichkeiten des Einsatzes von Fallfilm- und Dünnschichtverdampfer herangezogen, die mindestens eine weitgehende wenn nicht vollständige Entfernung auch relativ hochsiedender Diamine gewährleisten.

Die erfindungsgemäß verwendbaren Dicarbonsäuren bzw. ihre Ester enthalten 3 bis 38 Kohlenstoffatome im Säureteil. In Frage kommen z. B. Adipinsäure, Sebacinsäure, Nonan-, Decan-, Dodecandicarbonsäure, Dimerfettsäuren wie z. B. Pripol® 1014 der Firma Unilever u.ä. sowie Phthalsäure und Therephthalsäure oder Gemische dieser Dicarbonsäuren.

Der Einsatz entsprechender Ester ist nur vorgesehen, wenn eine genügend große Verträglichkeit, spätestens mit fortschreitender Reaktion gewährleistet ist.

Gegebenenfalls im Gemisch mit diesen Dicarbonsäure(ester)n können Monocarbonsäuren bzw. ihre Ester mitverwendet werden, doch soll deren Menge, in Äquivalenten an Carboxylgruppen ausgedrückt die Menge an Dicarbonsäure im allgemeinen nicht überschreiten. Sie enthalten 2 bis 24 Kohlenstoffatome im Säureteil der Verbindung, wobei z. B. α-Ethylhexansäure, iso-Nonansäure, Capryl-, Caprin-, Stearin-Säure, Linol-, Linolen-Säure sowie Benzoesäure in Frage kommen.

Geeignete (Meth-)acrylsäureester-Oligomere oder -Polymere weisen Molekulargewichte zwischen 300 und 2500, bevorzugt 500 bis 1500 auf. Sie werden durch die üblichen Polymeristionsverfahren als Homo- oder Copolymerisate aus (Meth-)acrylestern, (Meth-)acrylsäure, aromatischen Vinylmonomeren und mit diesen copolymerisierbaren ungesättigten Verbindungen, deren Fähigkeit zur Copolymerisation durch die Copolymerisationsparameter vorgegeben sind, hergestellt. (Copolymerisationsparameter: J. of Pol. Science, Vol. 54, Seiten 411 - 455, (1961)).

Die Umsetzungstemperaturen, bei denen Amidgruppen gebildet werden, schwanken je nach Carbonylaktivität zwischen 120 bis 200°C. Die Wirkungsweise dieser mitzuverwendenten Monocarbonsäuren wurde bereits behandelt. Längerkettige Moleküle wie z. B. Stearinsäure wirken sich darüber hinaus positiv auf die Pigmentbenetzbarkeit durch die Bindemittel aus.

Es zeigte sich am System Dimerfettsäure/Mono-Fettsäure (Äquivalenz der Carboxylgruppen), daß der Einbau einer Dicarbonsäure in das Bindemittelmolekül zu elastischeren Filmen führt, als der Einbau von Monocarbonsäuren.

Die Umsetzung des Di- oder Triglycidylether/Polyamin-Adduktes mit der Dicarbonsäure bzw. ihrem Ester werden im allgemeinen bei 100 bis 200°C vorgenommen, dabei ist der untere Temperaturbereich der bevorzugte für die Esteraminolyse.

Es ist anzunehmen, daß bei dieser Umsetzung praktisch ausschließlich die primären Aminogruppen des Epoxid/Amin-Adduktes reagieren. Für die Umsetzung mit Dicarbonsäuren wird eine Säurezahl von weniger als 5 bis 10 für das Umsetzungsprodukt angestrebt, für die entsprechenden Ester eine Esterzahl im entsprechenden Bereich; für die Umsetzung mit oligomeren und polymeren Acrylaten wird eine Esterzahl < 20 angestrebt.

Die stickstoffbasische Bindemittel weisen eine NH-Aminzahl von 50 bis 150, vorzugsweise 80 bis 130 mg

KOH/g sowie eine Schmelzviskosität von 1 bis 6000 mPas/s, gemessen bei 150°C an einer 88-%-igen (± 1 %) Lösung in Isodecanol, auf und sind durch Protonierung mit Säuren, insbesondere organischen Säuren, vorzugsweise Carbonsäuren, wie z. B. Essigsäure, Milchsäure oder Ameisensäure wasserverdünnbar.

Erfindungsgemäß wird das stickstoffbasische Bindemittel mit Amino- und/oder Phenoplasten kombiniert und vorzugsweise für die kathodische Elektrotauchlackierung von elektrisch leitenden Oberflächen, insbesondere von Metallteilen, die auch chemisch vorbehandelt sein können, z. B. Teilen aus Eisen, Stahl, Kupfer oder Aluminium verwendet.

Das kathodisch abscheidbare Elektrotauchbad enthält also außer der wäßrigen Dispersion oder Lösung des in ein Salz übergeführten stickstoffbasischen Bindemittels ein Aminoplast- oder Phenoplastharz. Geeignete Aminoplastharze sind die Reaktionsprodukte von Harnstoffen und Melaminen mit Aldehyden, die mit einem Alkohol weiter verethert sein können. Beispiele für geeignete Aminoplastharzkomponenten sind Harnstoff, Ethylenharnstoff, 2-oxo-4-hydroxy-hexahydropyrimidin, Thioharnstoff, Melamin, Benzoguanamin und Acetoguanamin; Beispiele für verwendbare Aldehyde sind Formaldehyd, Acetaldehyd, Isobutyraldehyd und Propionaldehyd, vorzugsweise Formaldehyd und Isobutyraldehyd. Die Aminoplastharze können in der Alkylenform eingesetzt werden; vorzugsweise werden diese Harze jedoch in der Etherform verwendet, wobei das Veretherungsmittel ein einwertiger Alkohol mit 1 bis etwa 8 Kohlenstoffatomen ist. Beispiele für geeignete Aminoplastharze sind Methylolharnstoff, Dimethoxymethylolharnstoff, butylierte polymere Harnstoff-Formaldehyd-Harze, Hexamethoxymethylmelamin, methylierte polymere Melamin-Formaldehyd-Harze und butylierte polymere Melamin-Formaldehyd-Harze. Gut geeignet sind zum Beispiel niedrig methylolierte hochveretherte Produkttypen. Aminoplastharze und Methoden zu deren Herstellung sind in "Encyclopedia of Polymer Science and Technology", Band 2 (1965), Seiten 1 bis 91, Interscience Publishers, beschrieben.

Als Phenoplastharze sind die üblichen Reaktionsprodukte von Phenolen mit Aldehyden zu nennen, welche reaktive Methylolgruppen aufweisen bzw. ihre Azaanalogen aus Aldehyden und Aminen, z. B. sekundären Aminen (vgl. z. B. DE-OS-2 320 536, DE-PS-2 320 301, DE-PS-2 357 075 und DE-PS-2 554 080). Diese Harze können abhängig von dem bei der ersten Kondensation angewendeten Phenol/Aldehyd-Molverhältnis eine monomere oder polymere Natur aufweisen. Spezielle Beispiele für die Herstellung der Phenoplastharze verwendete Phenole sind Phenol, o-, m- oder p-Kresol, 2,4-Xylenol, 3,4-Xylenol, 2,5-Xylenol, Cardanol und p-tert.-Butylphenol. Für diese Reaktion einsetzbare Aldehyde sind Formaldehyd, Acetaldehyd, Propionaldehyd und Isobutyraldehyd, vorzugsweise Formaldehyd und Isobutyraldehyd. Besonders gut brauchbare Phenoplastharze sind Polymethylolphenole, bei denen die Phenolgruppe mit einem Alkylrest (z. B. einer Methyl- oder Ethylgruppe) verethert ist. Bevorzugt zu verwenden sind Produkte, die Allylethergruppen aufweisen. Phenoplastharze und ihre Herstellungsmethoden sind in "Encyclopedia of Polymer Science and Technology", Band 10 (1969), Seiten 1 bis 68, Interscience Publishers, beschrieben. Bisphenole wie Bisphenol A und Novolacke bzw. solche Produkte, deren Methylolgruppen mindestens teilweise mit Alkoholen verethert worden sind, sind bevorzugt.

Der erfindungsgemäß verwendete Anteil des Aminoplast- bzw. Phenoplastharzes beträgt 20 bis 50, vorzugsweise etwa 25 bis etwa 40 Gew.-% des Gesamtfeststoffgewichts des organischen Überzugsmittels (= stickstoffbasisches Bindemittel + Aminoplast- und/oder Phenoplastharz).

Ein Vorteil der Bindemittel ist es, daß sie sich auch mit größeren Mengen der erfindungsgemäß einzusetzenden Vernetzer kombinieren lassen. Dazu wird das stickstoffbasische Bindemittel mit den Amino- bzw. Phenoplastharzen bei Raumtemperatur oder leicht erhöhter Temperatur gemischt. Sollte es jedoch aus fabrikationstechnischen oder anwendungstechnischen Gründen notwendig sein, z. B. um Methylolgruppen der Amino- bzw. Phenoplastharze zu entfernen, die Harzkombination bei höherer Temperatur (bei etwa 70 bis 120°C) zu halten, so muß mit beginnender Kondensation gerechnet werden. Diese ist mit einem Verlust an $NH_2$-Funktionen verbunden, d.h. mit entsprechender Abnahme des pH-Wertes der Lackbäder. Die Untergrenze des angegebenen Gehaltes au NH-Gruppen (80 mg KOH/g, bezogen auf das Umsetzungsprodukt Epoxid-Polyamin/Addukt und Dicarbonsäure) sollte deshalb nicht unterschritten werden. Diese Teilkondensationsreaktion empfiehlt sich insbesondere dann, wenn stickstoffbasische Bindemittel aus dem unteren Viskositätsbereich (etwa < 2000 mPas/s, gemessen bei 150°C als 88-%-ige Isodekandol-Lösung) eingesetzt werden.

Die wäßrigen Überzugsmittel können ferner Pigmente, Füllstoffe, Kupplungsmittel, Lösungsmittel, Korrosionsinhibitoren, Katalysatoren und Lackhilfsmittel, wie Antioxidantien und oberflächenaktive Mittel enthalten. Als Pigmente kommen die üblichen in Frage; geeignet sind ein oder mehrere Pigmente, wie Eisenoxid, Bleioxide, Strontiumsulfat, Ruß, Titandioxid, Talkum, Bariumsulfat, Bariumgelb ($BaCrO_4$), Cadmiumrot (CdS bzw. CdSe), Chromgrün oder Bleisilikat. Der verwendete Pigmentanteil kann bis zu einem Pigment/Bindemittel-Gewichtsverhältnis von 2 : 2, vorzugsweise von etwa 1 : 6, betragen. Außerdem können in den Bädern Schwermetallionen enthalten sein, wie $Pb^{++}$, $Cu^{++}$, $Sn^{++}$, $Zn^{++}$, $Zr^{++}$, $Co^{++}$, $Zr^{++}$, z. B. in Form ihrer Acetate, Napthenate oder Oleate.

Die Kupplungs-Lösungsmittel sind wasserlösliche oder teilweise wasserlösliche organische Lösungsmittel für die erfindungsgemäß verwendeten Harzkomponenten. Spezielle Beispiele für solche Lösungsmittel sind Ethylenglykolmonomethylether, Ethylenglykolmonoethylether, Ethylenglykolmonobutylether, Ethylenglykolmonohexylether, Diethylenglykolmonobutylether, Phenylglykol, Benzylalkohol, Ethanol, Isopropanol und i-Butanol. Die Kupplungs-Lösungsmittel werden in Anteilen von 0 bis 8 Gew.-%, bezogen auf das Gesamtgewicht des Überzugsbades, eingesetzt. Der Gesamtfeststoffgehalt des Elektrotauchbades wird im Bereich von etwa 5 bis etwa 25 Gew.-%, vorzugsweise von etwa 10 bis etwa 20 Gew.-%, jeweils bezogen auf das Gesamtbadgewicht, gehalten.

Wird beabsichtigt, die Härtung der erfindungsgemäßen Überzugsmittel zu beschleunigen, so kann das auf einfache Weise durch den Einbau von Sulfonatgruppierungen in das Epoxid/Amin-Addukt in einer Menge von 0,01 bis 1,5 %, vorzugsweise 0,1 bis 1,3 %, insbesondere 0,2 bis 1,0 % bewerkstelligt werden.

Dazu wird das Epoxid/Amin-Addukt mit Amidosulfonsäure umgesetzt. Diese Reaktion erfolgt ab 140 bis 180°C und findet unter Ammoniakabspaltung statt.

Epoxid/Amin-Addukt - $NH_2$ + $N_2N$ - $SO_3H$ → $NH_3$ + Epoxid/Amin-Addukt - $HNSO_3^{\ominus}$ + $H^{\oplus}$

Um sicherzustellen, daß die beabsichtigen Mengen der katalytisch wirkenden Sulfonatgruppen in das Bindemittel eingebaut werden, ist auf vollständigen Umsatz, d.h. auf vollständige $NH_3$-Abspaltung zu achten.

Die aus den protonierten erfindungsgemäßen Überzugsmitteln erhaltenen kathodisch abscheidbaren Lackzubereitungen, die auch konventionell durch Spritzen, Tauchen oder Fluten usw. verarbeitet werden können, weisen einen pH-Wert von 6,5 bis 8,7, vorzugsweise 6,8 bis 8,5, insbesondere von 7,0 bis 8,2 (vgl. dazu DE-OS-2 737 375, Seite 12, 1. Absatz, Zeilen 7 bis 9) bei einem Leitwert von 700 bis 2500, vorzugsweise 1000 bis 2000 µS auf.

Zur Abscheidung der Überzugsmittel auf den als Kathode geschalteten elektrisch leitfähigen Gegenstand wird ein Gleichstrom von 200 bis 500 V etwa 1 bis 3 Minuten angelegt. Nach dem Abspülen von noch anhaftenden Badmaterialien wird der auf dem elektrisch leitenden Körper kathodisch abgeschiedene Film etwa bei 140 bis 190, vorzugsweise 150 bis 175°C 10 bis 30 Minuten lang gehärtet.

Die erfindungsgemäßen Überzugsmittel ergeben bei der kathodischen Abscheidung farblose bis leicht gefärbte Beschichtungen, je nach eingesetztem Vernetzungsmittel, und eignen sich z. B. in Kombination mit Melaminharzen zur Herstellung von Weiß- oder Silberlacken. Sie besitzen die für den Einsatz als Grundierung notwendigen guten, bei Verwendung von Hexamethylendiamin zur Herstellung des Epoxid-Amin/Adduktes sehr guten Umgriffseigenschaften. Außerdem weisen sie hervorragende mechanische Eigenschaften, insbesondere Elastizitätseigenschaften, sowie sehr gute Korrosionsbeständigkeit - auch in Kombination mit Melaminharzen - z. B. im Salzsprühtest auf.

Die in den Beispielen angegebenen Teile und Prozente sind, soweit nicht anders angegeben, Gewichtsteile und Gewichtsprozente.

**Herstellung der Diglycidylether/Polyamin-Addukte**

(A) 1153 Teile eines Diglycidylethers aus Epichlorhydrin und Bisphenol A mit einem Epoxidwert von 0,5 und 288,0 Teile eines ebensolchen Harzes mit einem Epoxidwert von 0,2, werden in 617,5 Teilen Toluol bei 70°C gelöst.

1912,0 Teile dieser Lösung werden innerhalb von 2,5 Stunden 462,0 Teilen 1,3-Diaminopropan bei 70°C zudosiert. Das überschüssige Amin und Lösungsmittel wird im Vakuum bei zuletzt 200 bis 210°C weitgehend entfernt.

Das Addukt weist eine Aminzahl von 235 mg KOH/g auf, wovon 9,0 mg KOH/g auf tertiäre Aminogruppen entfallen. Das Addukt besitzt einen Gesamtstickstoffgehalt von 5,3 %, wovon 2,3 % auf primäre-, 2,8 % auf sekundäre- und 0,2 % auf tertiäre-Aminogruppen entfallen.

(B) 1614,6 Teile eines Diglycidylethers aus Epichlorhydrin und Bisphenol A mit einem Epoxidwert von 0,5 und 403,0 Teile eines ebensolchen Harzes mit einem Epoxidwert von 0,2 werden in 864,5 Teilen Toluol bei 70°C gelöst.

2678,0 Teile dieser Lösung werden innerhalb von 2,5 Stunden 869,2 Teilen Hexamethylendiamin bei 70°C zudosiert. Das überschüssige Amin wird bei 150°C im Vakuum teilweise entfernt und das Konzentrat in einem Dünnschichtverdampfer bei 190°C und einem Druck von 0,3 Torr von überschüssigem Amin befreit.

Das Produkt weist einen Erweichungspunkt von 70°C und einen Gesamtstickstoffgehalt von 4,7 % auf, wovon 1,9 % auf primäre-, 2,6 % auf sekundäre- und 0,2 % auf tertiäre-Aminogruppen entfallen.

(C) 807,3 Teile eines Diglycidylethers aus Epichlorhydrin und Bisphenol A mit einem Epoxidwert von 0,5 und 201,6 Teile eines ebensolchen Harzes mit einem Epoxidwert von 0,2 werden in 150,0 Teilen Ethylglykol bei 80°C gelöst.

1076,0 Teile dieser Lösung werden innerhalb von 2 Stunden 764,0 Teilen 4,9-Dioxadodecan-1,2-diamin bei 70°C zudosiert. Das etwas aufkonzentrierte Produkt wird anschließend über einen Dünnschichtverdampfer bei 210°C und 0,3 Torr von überschüssigem Amin befreit.

Das erhaltene Produkt weist einen Erweichungspunkt von $< 35$°C, eine Aminzahl bei 165 mg KOH/g und einen Gehalt an tertiären Aminogruppen von 8,8 mg KOH/g auf.

(D) 1920,0 Teile eines Diglycidylethers aus Epichlorhydrin und Bisphenol A mit einem Epoxidwert von 0,5 werden in 480,0 Teilen Toluol gelöst.

2000,0 Teile dieser Lösung werden innerhalb von 2 Stunden 1485 Teilen Hexamethylendiamin bei 70°C zudosiert. Das Produkt wird wie unter B beschrieben, weiterbehandelt.

Das erhaltene Addukt weist einen Erweichungspunkt von 69°C und einen Gesamtstickstoffgehalt von 4,2 % auf, wovon 2,0 auf primäre, 2,1 % auf sekundäre und 0,1 % auf tertiäre Aminogruppen entfallen.

(E) 2099,0 Teile eines Diglycidylethers aus Epichlorhydrin und Bisphenol A mit einem Epoxidwert von 0,5 und

524,2 Teile eines ebensolchen Harzes mit einem Epoxidwert von 0,2 werden in 1124,0 Teilen Toluol bei 70°C gelöst.

3481 Teile dieser Lösung werden bei 70°C innerhalb von 2,5 Stunden 682 Teilen Ethylendiamin zudosiert.

Nach Zulaufende wird das überschüssige Amin durch Vakuumdestillation zuletzt bei 190°C weitgehend entfernt. Das Produkt weist eine Aminzahl von 210 mg KOH/g auf.

**Herstellung eines Polyacrylates**

800 Teile Isopropanol werden in einem Druckkessel unter $N_2$ auf 185°C aufgeheizt. Innerhalb von 2 Stunden wird eine Monomerenmischung aus 1404 Teilen Butylacrylat, 1152 Teilen Ethylhexylacrylat, 792 Teilen Methylacrylat und 252 Teilen Acrylsäure über eine Pumpe bei 185°C zudosiert. Anschließend werden 144 Teile Ditertiärbutylperoxid, gelöst in 100 Teilen Isopropanol, zugesetzt und 1 Stunde nachpolymerisiert. Danach werden nochmals zweimal 18,0 Teile Ditertiärbutylperoxid in 12,5 Teilen Isopropanol zudosiert und jeweils 1 Stunde nachpolymerisiert. Dann wird das Lösungsmittel soweit wie möglich abdestilliert. Der Feststoffgehalt des Harzes beträgt 97,9 %, die Molmasse liegt bei 810.

**Herstellung der stickstoffbasischen Bindemittel und Elektrotauchlackierung**

**Beispiel A1**

234,0 Teile des unter (A) beschriebenen Diglycidylether/Polyamin-Adduktes werden unter $N_2$ bei 100°C mit 4,5 Teilen in Wasser gelöster Amidosulfonsäure versetzt. Der Ansatz wird bis 140°C von $H_2O$ befreit, dann wird auf 160°C erhitzt, bis praktisch kein Ammoniak mehr entweicht. Anschließend werden 66 Teile Dimerfettsäure (z. B. Pripol 1014) zugesetzt und bei 170°C unter Entfernung von Wasser weiter erhitzt, bis eine Säurezahl von 10,5 und eine Viskosität von 2300 mPa.s bei 150°C, gemessen mit dem ICI-Platte/Kegel-Viskosimeter erreicht ist. Das Umsetzungsprodukt wird mit 40,0 Teilen Butylglykol, 80,0 Teilen Ethylglykol und 40,0 Teilen Ethanol verdünnt. Es besitzt dann einen Feststoffgehalt von 66 % und eine Aminzahl von 62,4 mg KOH/g. Die t-Aminzahl hat einen Wert von 6,0.

Zur Elektrotauchlackierung werden 288,0 Teile dieses Harzes mit 54,0 Teilen eines Trimethylolphenolallylethers, z. B. Methylonharz GE 75 108 der Fa. General Electric, 15,0 Teilen Ethanol und 6,3 Teilen Essigsäure gemischt, mit vollentsalztem Wasser langsam auf 2000 Teile verdünnt und 24 Stunden bei 25°C gerührt. Das Bad hat einen pH-Wert 7,3. Der Leitwert beträgt 1400 µS. Die Abscheidung bei 250 V/2 Minuten auf mit Zinkphosphat beschichteten, als Kathode geschalteten Stahlblechen ergibt nach dem Einbrennen (20 Minuten bei 160°C) ca. 17 µm dicke Beschichtungen mit ausgezeichneten Elastizitätseigenschaften. Die Korrosionsprüfung (nach DIN 50 021) ergibt nach 20 Tagen einen Wert von 3 bis 5 mm.

**Beispiel B1**

400,0 Teile des unter B. beschriebenen Diglycidylether/Polyamin-Adduktes werden mit 55,0 Teilen Dimerfettsäure (z. B. Pripol 1015), 20 Teilen Stearinsäure, 7 Teilen Triphenylphosphin, 80,0 Teilen Isodecanol und 25 Teilen Toluol versetzt und auf 100°C erhitzt; anschließend werden 2,15 Teile Amidosulfonsäure, in 5 Teilen $H_2O$ warm gelöst, zugesetzt und in 1,5 Stunden auf 160°C erhitzt, wobei Toluol, das zugesetzte Wasser und Teile des Reaktionswassers, sowie ab 140°C Ammoniak entfernt werden. Der Ansatz wird bei 170°C gehalten bis eine Viskosität von 1650 mPa.s bei 150°C (gemessen mit dem Epprecht Viskosimeter) erreicht ist. Die Säurezahl beträgt 6,3. Der Ansatz wird verdünnt mit einer Mischung aus je 66,5 Teilen Butylglykol, Ethylglykol und Toluol sowie 41,5 Teilen Ethanol.

Der Feststoffgehalt beträgt 60,5 %, die Aminzahl 73 mg KOH/g. Die t-Aminzahl liegt bei 4,5 mg KOH/g.

Zur Elektrotauchlackierung werden 466 Teile des Bindemittels mit 128,0 Teilen Melamin/Formaldehyd-Harz I (Melamin : Formaldehyd : Methoxyl = ca. 1 : 4 : 3; Festgehalt: ca. 70 %, z. B. Cymel® 325 der Fa. Cyanamid) und 46,0 Teilen Melamin/Formaldehyd-Harz II (Hexamethylolmelamin vollständig mit Methanol, Ethanol verethert, Festgehalt ca. 95 %, z. B. Cymel 1116), 20 Teilen Isodecanol und 8,4 Teilen Essigsäure gemischt und mit vollentsalztem Wasser auf 4000 Teile Badvolumen mit 10 % Feststoffgehalt verdünnt und 24 Stunden bei 23°C gerührt. Das Bad hat einen pH-Wert von 7,8, der Leitwert beträgt 1200 µS. Die Abscheidung bei 300 V/2 Minuten auf mit Zinkphosphat beschichteten, als Kathode geschalteten Stahlblechen, ergibt nach dem Einbrennen (30 Minuten bei 160°C) ca. 18 µm dicke, praktisch farblose Beschichtungen mit ausgezeichneten Elastizitätseigenschaften.

Der Umgriff (Methode Ford) beträgt 18 cm. Die Korrosionsprüfung (nach DIN 50 021) ergibt nach 20 Tagen einen Wert von 3 mm.

**Beispiel B2**

400,0 Teile des unter (B) beschriebenen Diglycidylether/Polyamin-Adduktes werden mit 61,0 Teilen Dimerfettsäure, (z. B. Pripol 1014) und 19 Teilen Stearinsäure versetzt und auf ca. 130° C aufgeheizt.

In die Schmelze tropft man innerhalb von 5 Minuten eine Lösung von 48 Teilen Titantetrabutylat in 71,0 Teilen Isodecanol und 25,0 Teilen Toluol.

Anschließend wird der Ansatz bei 170° C gerührt, bis eine Säurezahl von ca. 3,0 mg KOH/g erreicht ist. Das Bindemittel besitzt dann eine Viskosität von 1600 mPa.s bei 150° C. Zur Herstellung einer ca. 60-%-igen Lösung werden je 65 Teile Butylglykol, Ethylglykol, Toluol und 41,0 Teile Ethanol zugesetzt. Die Aminzahl des Produktes liegt bei 74,3 mg KOH/g.

Zur Elektrotauchlackierung werden 480,0 Teile des Bindemittels mit 128,0 Teilen des in Beispiel A1 genannten Methylonharzes GE 75108 und 10,0 Teilen Essigsäure gemischt, mit vollentsalztem Wasser auf 4000 Teile Badvolumen mit 10 % Feststoffgehalt verdünnt und 48 Stunden bei 25°C zur Entfernung der flüchtigen Lösungsmittel gerührt. Das Bad weist einen pH-Wert von 7,8 und einen Leitwert von 1800 µS auf. Die kathodische Abscheidung bei 300 V/2 Minuten auf mit Zinkphosphat beschichteten Stahlblechen, ergibt nach dem Einbrennen (20 Minuten 160° C) ca. 17 µm dicke, ausgezeichnet schlagfeste Beschichtungen. Der Umgriff beträgt 20,5 cm. Die Korrosionsprüfung ergibt nach 20 Tagen einen Wert von 1 bis 2 mm.

**Beispiel B3**

250,0 Teile des unter (B) beschriebenen Diglycidylether/Polyamin-Adduktes, 25,0 Teile des oben beschriebenen Polyacrylates in 41,5 Teilen Isodecanol werden mit 41,7 Teilen Triphenylphosphin auf 100 bis 110° C erhitzt. Nach Zugabe von 2,00 Teilen Amidosulfonsäure (gelöst in Wasser) wird auf 140° C erhitzt. Dabei wird der überliegende Teil des Wassers entfernt. Anschliessend wird auf 160° C aufgeheizt, wobei die Ammoniak-Entwicklung voll einsetzt. Bis zu einer Viskosität von 3000 mPa.s bei 150°C wird der Ansatz bei dieser Temperatur gehalten. Verdünnt wird mit je 36,0 Teilen Butylglykol, Ethylglykol, Toluol, und je 18,0 Teilen Hexylglykol und Ethanol. Das Bindemittel weist einen Festgehalt von 60,3 %, eine Aminzahl von 88,6 mg KOH/g, eine Esterzahl von 12 mg KOH/g und eine Säurezahl von 91 mg KOH/g auf.

125,0 Teile des Bindemittels, 32,0 Teile eines käuflichen veretherten Bisphenol A/Formaldehydharzes (auf der Basis eines Butylethers aus Trimethylolierten Bisphenol A mit einem Festgehalt von 78,5 %) in Isopropanol und 2,8 Teile Essigsäure werden gemischt. Anschließend wird langsam mit vollentsalztem Wasser auf ca. 1000 Teile verdünnt und über Nacht bei 23° C gerührt. Der pH-Wert beträgt 7,9, der Leitwert 1520 µS. Die kathodische Abscheidung bei 280 V/2 Minuten auf mit Zinkphosphat beschichteten Stahlblechen, ergibt nach dem Einbrennen (30 Minuten 160° C) ca. 18 µm dicke Beschichtungen. Die Korrosionsprüfung ergibt nach 20 Tagen einen Wert von 2 bis 3 mm.

**Beispiel C1**

248,0 Teile des unter (C) beschriebenen Diglycidylether/Polyamin-Adduktes und 28,0 Teile Dimethylterephthalat in 42,0 Teilen Isodecanol werden auf 100° C erhitzt. Bei 100° C werden 1,24 Teile Amidosulfonsäure, gelöst in Wasser, zugesetzt und langsam weiter auf 150° C erhitzt, wobei zuerst das Wasser, später Ammoniak entfernt werden; anschließend werden 28,0 Teile Dimethylterephthalat in 42,0 Teilen Isodecanol zugesetzt und weiter bei 150° C erhitzt. Nach Erreichen einer Viskosität von 5000 mPa.s bei 150° C, wird mit einer Mischung aus je 37,6 g Butylglykol und Ethylglykol, sowie 33,5 Teilen Toluol verdünnt.

Das Bindemittel weist eine Aminzahl von 72 mg KOH/g, eine Esterzahl von 10 g KOH/g sowie einen Feststoffgehalt von 62 % auf.

Zur Verwendung als Elektrotauchlackbindemittel werden 120,0 Teile des in Beispiel A1 genannten Methylonharzes GE 75108 zugesetzt und solange bei 100° C gehalten, bis eine Viskosität von 3600 mPa.s bei 75° C und eine Aminzahl von 50,7 erreicht wird. Danach wird der Ansatz mit 5,4 Teilen Essigsäure protoniert und mit 8,0 Teilen Isodekanol sowie etwas Wasser auf einen Feststoffgehalt von 61 % eingestellt.

100,0 Teile des Festharzes werden langsam mit vollentsalztem Wasser auf ein Volumen von 1000 Teilen verdünnt und über Nacht bei 23° C gerührt. Der pH-Wert beträgt 7,0, der Leitwert liegt bei 1700 µS.

Die kathodische Abscheidung bei 200 V/2 Minuten auf mit Zinkphosphat beschichteten Stahlblechen, ergibt nach dem Einbrennen (20 Minuten 160° C) ca. 15 µm dicke Beschichtungen. Die Korrosionsprüfung ergibt nach 20 Tagen einen Wert von ca. 2 mm.

**Beispiel C2**

265,0 Teile des unter (C) beschriebenen Diglycidylether/Polyamin-Adduktes und 20,5 Teile des oben beschriebenen Polyacrylates in 44 Teilen Isodecanol und 4,4 Teile Triphenylphosphin werden auf 160°C aufgeheizt, mit einer wäßrigen Lösung von 2,2 Teilen Amidosulfonsäure versetzt, langsam bis zur vollständigen Entfernung des Wassers auf 140°C aufgeheizt und anschließend bei 160°C bis zu einer Viskosität von 3200 mPa.s, gemessen bei 150°C, zur Reaktion gebracht. Der Ansatz wird mit je 38,2 Teilen Butylglykol, Ethylglykol, Toluol und je 19,0 Teilen Hexylglykol und Ethanol verdünnt.

Das Bindemittel weist einen Festgehalt von 60,4 %, eine Aminzahl von 80 mg KOH/g, eine Esterzahl von 11 mg KOH/g und eine Säurezahl von 8 mg KOH/g auf.

130 Teile des Bindemittels, 32,0 Teile des in Beispiel B1 genannten Melamin/Formaldehydharzes Cymel 325, 20,0 Teile des in Beispiel B1 genannten Melamin/Formaldehydharzes Cymel 1116 und 2,6 Teile Essigsäure werden gemischt, mit vollentsalztem Wasser auf 1000 Teile verdünnt und über Nacht bei 23°C gerührt. Der pH-Wert beträgt 8,1, der Leitwert 1300 µS. Die kathodische Abscheidung bei 150 V/2 Minuten auf mit Zinkphosphat beschichteten Stahlblechen, ergibt nach dem Einbrennen (30 Minuten 160°C) ca. 18 µm dicke Beschichtungen. Die Korrosionsprüfung ergibt nach 20 Tagen einen Wert von 4 bis 5 mm.

**Beispiel D1**

160,0 Teile des unter (D) beschriebenen Diglycidylether/Polyamin-Adduktes, 28,0 Teile Dimerfettsäure, 9,0 Teile Benzoesäure, 24,0 Teile Isodecanol, 12,0 Teile Hexylglykol und 3 Teile Triphenylphosphin werden auf 100°C aufgeheizt, mit einer wäßrigen Lösung von 1,0 Teilen Amidosulfonsäure versetzt und zur Entfernung des Wassers langsam auf 140°C aufgeheizt. Die Amidierung wird bei 170°C bis zum Erreichen einer Säurezahl von 11,5 durchgeführt. Der Ansatz wird mit je 27,0 Teilen Butylglykol, Ethylglykol, Toluol sowie 12 Teilen Ethanol verdünnt und weist dann einen Feststoffgehalt von 60,5 %, eine Aminzahl von 63,5 und eine t-Aminzahl von 1,4 auf.

Zur Elektrotauchlackierung werden 115,0 Teile des Bindemittels mit 40,0 Teilen des in Beispiel B3 genannten käuflichen veretherten Bisphenol A/Formaldehyd-Harzes in Isopropanol gemischt, mit 2,0 Teilen Essigsäure protoniert und auf ein Badvolumen von 1000 Teilen verdünnt. Nach dem Ausrühren besitzt das Bad einen pH-Wert von 7,65 und einen Leitwert von 1300 µS. Die kathodische Abscheidung bei 280 V/2 Minuten auf mit Zinkphosphat beschichteten Stahlblechen ergibt nach dem Einbrennen (20 Minuten bei 170°C) ca. 18 µm dicke Beschichtungen. Die Korrosionsprüfung ergibt nach 10 Tagen einen Wert von 2 bis 3 mm.

**Vergleichsbeispiele: Herstellung der Bindemittel und Elektrotauchlackierung**

**Vergleichsbeispiel E1**

380,0 Teile des unter (E) beschriebenen Diglycidylether/Ethylendiamin-Adduktes werden unter $N_2$ mit 80,0 Teilen Dimerfettsäure, 25,0 Teilen Stearinsäure, 7,0 Teilen Triphenylphosphin und 72,0 Teilen Isodecanol versetzt und bei 100°C aufgeschmolzen. Dann werden 0,9 Teile Amidosulfonsäure, gelöst in 9,0 Teilen Wasser, zugesetzt und langsam auf 140°C aufgeheizt, wobei Wasser entfernt wird. Anschließend wird bei 170°C unter Entfernung von Wasser, Toluol und Ammoniak die Reaktion solange fortgeführt, bis eine Viskosität von 2900 mPa.s bei 150°C sowie eine Säurezahl von 6,5 mg KOH/g erreicht ist.

Danach wird mit je 61,0 Teilen Butylglykol, Ethylglykol, Toluol sowie 35,0 Teilen Ethanol verdünnt.

Das so erhaltene Bindemittel E1 weist einen Feststoffgehalt von 61 %, eine Aminzahl von 80 mg KOH/g und eine t-Aminzahl von 5,5 mg KOH/g auf.

a) 115,0 Teile des Bindemittels E1 werden mit 34,0 Teilen (~ 20 % auf Festharz) des in Beispiel A1 genannten Methylonharzes GE 75108 abgemischt, mit 2,0 Teilen Essigsäure protoniert und mit vollentsalztem Wasser unter Rühren langsam auf 1000 Teile Badvolumen verdünnt. Die Dispersion hat einen pH-Wert von 6,5 und ist nicht stabil.

b) 130,0 Teile des Bindemittels E1 werden in 23,5 Teilen (~ 30 %, bezogen auf Festharz) Methylonharz GE 75108 abgemischt, mit 2,5 Teilen Essigsäure protoniert und mit vollentsalztem Wasser auf ein Badvolumen von 1000 Teilen verdünnt. Die Dispersion hat einen pH-Wert von 6,5 und ist nicht stabil.

c) 110,0 Teile des Bindemittels E1 werden mit 11,0 Teilen Melamin/Formaldehydharz Cymel 1116 (der Fa. Cyanamid) mit 30,0 Teilen des Melamin/Formaldehydharzes Cymel 325 abgemischt, mit 2,0 Teilen Essigsäure protoniert und mit vollentsalztem Wasser auf ein Badvolumen von 1000 Teilen verdünnt. Der pH-Wert des wäßrigen Bades beträgt 7,0. Nach 5 Tagen Alterung bei 23°C ist der pH-Wert auf 5,3 abgefallen; nach 14 Tagen hat das Bad einen pH-Wert von 4,8 erreicht.

d) Im Vergleich dazu, ist der Bad pH-Wert des unter B1 beschriebenen Bades mit einem pH-Wert von 7,8 nach 5 Tagen Alterung unverändert geblieben. Nach 14 Tagen Alterung wurde ein pH-Wert von 7,6 festgestellt.

**Patentansprüche** für die Vertragsstaaten: BE, CH, DE, FR, GB, IT, LI, NL, SE

1. Hitzehärtbares Überzugsmittel, enthaltend eine Kombination aus 50 - 80 Gew.-%, bezogen auf Bindemittel und Vernetzungsmittel, eines stickstoffbasischen, durch Protonieren mit Säure wasserverdünnbaren Bindemittels, das durch Umsetzung eines Polyepoxidharzes mit einem Polyamin und nachfolgender Amidierung eines Teils der Aminogruppen hergestellt wurde, und 20 - 50 Gew.-% eines Vernetzungsmittels auf Basis eines Amino- und/oder Phenoplasten sowie ggf. Pigmente, Füllstoffe, Korrosionsinhibitoren, Katalysatoren, Antioxydantien oder andere Lackhilfsmittel, und in einer Menge von bis zu 40 %, bezogen auf das Gesamtgewicht des Überzugsmittels organische Lösungsmittel, dadurch gekennzeichnet, daß als stickstoffbasisches Bindemittel ein Umsetzungsprodukt einer Dicarbonsäure und/oder eines Dicarbonsäureesters, wobei der Dicarbonsäur e(ester) ggf. teilweise durch eine Monocarbonsäure und/oder einen Monocarbonsäureester ersetzt sein kann, oder eines (Meth-)acrylsäureester-Oligomeren oder -Polymeren mit einem Addukt aus einem Di- oder Triglycidylether und einem Polyamin, wobei das Polyamin mindestens 2 Aminstickstoffe pro Molekül und mindestens eine Alkylenkette mit mindestens 3 Kohlenstoffatomen zwischen den Aminogruppen enthält, eingesetzt wird, mit der Maßgabe, daß für die Herstellung des Di- oder Triglycidylether/Polyamin-Adduktes auf ein Epoxidäquivalent des Di- oder Triglycidylethers 2 bis 10 NH-Äquivalente des Polyamins eingesetzt werden, das stickstoffbasische Bindemittel eine NH-Aminzahl von 50 bis 150 mg KOH/g sowie eine Viskosität von 1 bis 6000 mPa.s, gemessen bei 150° C an einer Lösung mit einem Festgehalt von 88 ± 1 % in Isodecanol, aufweist.

2. Überzugsmittel nach Anspruch 1, dadurch gekennzeichnet, daß als Polyamin für die Herstellung des Di- oder Triglycidylether/Polyamin-Adduktes n-Hexan-1,6-diamin, 4,7-Dioxadecan-1,10-diamin oder 4,9-Dioxadodecan-1,12-diamin verwendet wird.

3. Überzugsmittel nach Anspruch 1, dadurch gekennzeichnet, daß als Dicarbonsäure und/oder Dicarbonsäureester zur Herstellung des stickstoffbasischen Bindemittels eine dimerisierte Fettsäure verwendet wird.

4. Überzugsmittel nach Anspruch 1, dadurch gekennzeichnet, daß das stickstoffbasische Bindemittel Sulfonatgruppen in einer Menge von 0,01 bis 1,5 % eingebaut enthält.

5. Überzugsmittel nach Anspruch 1 und 4, dadurch gekennzeichnet, daß als Vernetzer ein niedrig methyloliertes, hochverethertes Aminoplastharz, als Phenoplastharz ein methyloliertes Phenol, das an der phenolischen OH-Gruppe mit Allylalkohol verethert ist, oder ein methyloliertes Mono-, Di- oder Polyphenol, dessen Methylolgruppen zumindest teilweise verethert sind, eingesetzt wird.

6. Verwendung der Überzugsmittel gemäß einem der vorhergehenden Ansprüche nach Protonierung mit Säure als Bindemittel für die kathodische Elektrotauchlackierung von Metallteilen.

**Patentansprüche** für den Vertragsstaat: AT

1. Verfahren zur Herstellung eines hitzehärtbaren Überzugsmittels, wobei 50 - 80 Gew.-%, bezogen auf Bindemittel und Vernetzungsmittel, eines stickstoffbasischen, durch Protonieren mit Säure wasserverdünnbaren Bindemittels, das durch Umsetzung eines Polyepoxidharzes mit einem Polyamin und nachfolgender Amidierung eines Teils der Aminogruppen hergestellt wurde, und 20 - 50 Gew.-% eines Vernetzungsmittels auf Basis eines Amino- und/oder Phenoplasten sowie gegebenenfalls Pigmente, Füllstoffe, Korrosionsinhibitoren, Katalysatoren, Antioxydantien oder andere Lackhilfsmittel, und in einer Menge von bis zu 40 %, bezogen auf das Gesamtgewicht des Überzugsmittels organische Lösungsmittel kombiniert werden, dadurch gekennzeichnet, daß das stickstoffbasische Bindemittel durch Umsetzung einer Dicarbonsäure und/oder eines Dicarbonsäureesters, wobei der Dicarbonsäure(ester) gegebenenfalls teilweise durch eine Monocarbonsäure und/oder einen Monocarbonsäureester ersetzt sein kann, oder eines (Meth-)acrylsäureester-Oligomeren oder -Polymeren mit einem Addukt aus einem Di- oder Triglycidylether und einem Polyamin, wobei das Polyamin mindestens 2 Aminstickstoffe pro Molekül und mindestens eine Alkylenkette mit mindestens 3 Kohlenstoffatomen zwischen den Aminogruppen enthält, hergestellt wird, mit der Maßgabe, daß für die Herstellung des Di- oder Triglycidylether/Polyamin-Adduktes auf ein Epoxidäquivalent des Di- oder Triglycidylethers 2 bis 10 NH-Äquivalente des Polyamins eingesetzt werden, das stickstoffbasische Bindemittel eine NH-Aminzahl von 50 bis 150 mg KOH/g sowie eine Viskosität von 1 bis 6000 mPa.s, gemessen bei 150°C an einer Lösung mit einem Festgehalt von 88 ± 1 % in Isodecanol, aufweist.

2. Verfahren nach Anspruch 1, dadurch gekennzeichnet, daß als Polyamin für die Herstellung des Di- oder Triglycidylether/Polyamin-Adduktes n-Hexan-1,6-diamin, 4,7-Dioxadecan-1,10-diamin oder 4,9-Dioxadodecan-1,12-diamin verwendet wird.

3. Verfahren nach Anspruch 1, dadurch gekennzeichnet, daß als Dicarbonsäure und/oder Dicarbonsäureester zur Herstellung des stickstoffbasischen Bindemittels eine dimerisierte Fettsäure verwendet wird.

4. Verfahren nach Anspruch 1, dadurch gekennzeichnet, daß das stickstoffbasische Bindemittel Sulfonatgruppen in einer Menge von 0,01 bis 1,5 % eingebaut enthält.

5. Verfahren nach Anspruch 1 oder 4, dadurch gekennzeichnet, daß als Vernetzer ein niedrig methyloliertes, hochverethertes Aminoplastharz, als Phenoplastharz ein methyloliertes Phenol, das an der phenolischen OH-Gruppe mit Allylalkohol verethert ist, oder ein methyloliertes Mono-, Di- oder Polyphenol, dessen Methylolgruppen zumindest teilweise verethert sind, eingesetzt wird.

6. Verfahren zur kathodischen Elektrotauchlackierung von Metallteilen, dadurch gekennzeichnet, daß als Bindemittel ein hitzehärtbares Überzugsmittel, das gemäß einem der vorhergehenden Ansprüche hergestellt und mit Säure protoniert ist, eingesetzt wird.

**Claims** for the Contracting States: BE, CH, DE, FR, GB, IT, LI, NL, SE

1. A heat-curable coating agent which contains a combination of 50 - 80 % by weight, based on binder and crosslinking agent, of a binder which possesses basic nitrogen groups and can be rendered water-dilutable by protonation with an acid and which was prepared by reaction of a polyepoxy resin with a polyamine and subsequent amidation of some of the amino groups, and 20 - 50 % by weight of a cross-linking agent, based on an aminoplast or phenoplast, and if required pigments, fillers, corrosion inhibitors, catalysts, antioxidants and other surface coating assistants and, in an amount of not more than 40 %, based on the total weight of the coating agent, organic solvents, wherein the binder possessing basic nitrogen groups is a reaction product of a dicarboxylic acid or ester, which may have been partly replaced by a monocarboxylic acid or ester, or of a (meth)acrylic ester oligomer or polymer with an adduct obtained from a di- or triglycidyl ether and a polyamine, the latter containing 2 or more amine nitrogen atoms per molecule and one or more alkylene chains of not less than 3 carbon atoms between the amino groups, with the proviso that from 2 to 10 NH equivalents of the polyamine are employed per epoxide equivalent of the di- or triglycidyl ether for the preparation of the di- or triglycidyl ether/polyamine adduct, and the binder possessing basic nitrogen groups has an NH amine number of from 50 to 150 mg of KOH/g and a viscosity of from 1 to 6,000 mPa.s, measured at 150°C on an isodecanol solution having a solids content of 88 $\pm$ 1 %.

2. A coating agent as claimed in claim 1, wherein the polyamine used for the preparation of the di- or triglycidyl ether/polyamine adduct is n-hexane-1,6-diamine, 4,7-dioxadecane-1,10-diamine or 4,9-dioxadodecane-1,12-diamine.

3. A coating agent as claimed in claim 1, wherein the dicarboxylic acid or ester for the preparation of the binder possessing basic nitrogen groups is a dimerized fatty acid.

4. A coating agent as claimed in claim 1, wherein the binder possessing basic nitrogen groups contains sulfonate groups in an amount of from 0.01 to 1.5 %.

5. A coating agent as claimed in claims 1 and 4, wherein the cross-linking agent used is a highly etherified aminoplast resin having a low methylol content, and the phenoplast resin used is a methylolated phenol etherified at the phenolic OH group with allyl alcohol, or a methylolated mono-, di- or polyphenol, some or all of whose methylol groups are etherified.

6. Use of a coating agent as claimed in any of the preceding claims as a binder for the cathodic electrocoating of metal articles, after protonation with an acid.

**Claims** for the Contracting State: AT

1. A process for preparing a heat-curable coating agent in which 50 - 80 % by weight, based on binder and cross-linking agent, of a binder which possesses basic nitrogen groups and can be rendered water-dilutable by protonation with an acid and which was prepared by reaction of a polyepoxy resin with a polyamine and subsequent amidation of some of the amino groups, and 20 - 50 % by weight of a cross-linking agent, based on an aminoplast or phenoplast, and if required pigments, fillers, corrosion inhibitors, catalysts, antioxidants and other surface coating assistants and, in an amount of not more than 40 %, based on the total weight of the coating agent, organic solvents, are combined, wherein the binder possessing basic nitrogen groups is prepared by reaction of a dicarboxylic acid or ester, which may have been partly replaced by a monocarboxylic acid or ester, or of a (meth)acrylic ester oligomer or polymer with an adduct obtained from a di- or triglycidyl ether and a polyamine, the latter containing 2 or more amine nitrogen atoms per molecule and one or more alkylene chains of not less than 3 carbon atoms between the amino groups, with the proviso that from 2 to 10 NH equivalents of the polyamine are employed per epoxide equivalent of the di- or triglycidyl ether for the preparation of the di- or triglycidyl ether/polyamine adduct, and the binder possessing basic nitrogen groups has an NH amine number of from 50 to 150 mg of KOH/g and a viscosity of from 1 to 6,000 mPa.s, measured at 150°C on an isodecanol solution having a solids content of 88 $\pm$ 1 %.

2. A process as claimed in claim 1, wherein the polyamine used for the preparation of the di- or triglycidyl ether/polyamine adduct is n-hexane-1,6-diamine, 4,7-dioxadecane-1,10-diamine or 4,9-dioxadodecane-1,12-diamine.

3. A process as claimed in claim 1, wherein the dicarboxylic acid or ester for the preparation of the binder possessing basic nitrogen groups is a dimerized fatty acid.

4. A process as claimed in claim 1, wherein the binder possessing basic nitrogen groups contains sulfonate groups in an amount of from 0.01 to 1.5 %.

5. A process as claimed in claims 1 and 4, wherein the cross-linking agent used is a highly etherified aminoplast resin having a low methylol content, and the phenoplast resin used is a methylolated phenol

etherified at the phenolic OH group with allyl alcohol, or a methylolated mono-, di- or polyphenol, some or all of whose methylol groups are etherified.

6. A method for the cathodic electro-coating of metal articles, wherein the binder used is a heat-curable coating agent prepared as claimed in any of the preceding claims and protonated with an acid.

**Revendications** pour les Etats Contractants: BE, CH, DE, FR, GB, IT, LI, NL, SE

1. Composition de revêtement thermodurcissable contenant une combinaison de 50 à 80 % en poids, par rapport aux liant et agent de réticulation, d'un liant à base azotée, diluable dans l'eau par protonation avec des acides, qui a été préparé par réaction d'une résine polyépoxyde avec une polyamine et amidation ultérieure d'une partie des groupements amino, et de 20 à 50 % en poids d'un agent de réticulation à base d'un amino- et/ou phénoplaste ainsi éventuellement que des pigments, des charges, des inhibiteurs de corrosion, des catalyseurs, des anti-oxydants ou d'autres adjuvants de laque, et des solvants organiques à raison de jusqu'à 40 % par rapport au poids total de la composition de revêtement caractérisée en ce qu'on met en réaction, en tant que liant à base azotée, un produit de réaction d'un acide dicarboxylique et/ou d'un ester d'acide dicarboxylique, l'acide dicarboxylique ou son ester pouvant éventuellement être partiellement remplacé par un acide monocarboxylique et/ou un ester d'acide monocarboxylique, ou d'un oligomère ou polymère de (méth)acrylate avec un produit d'addition d'un éther di- ou tri-glycidylique et d'une polyamine, ladite polyamine contenant au moins deux atomes d'azote amino par molécule et au moins une chaîne alkylène avec au moins 3 atomes de carbone entre les groupements amino, à la condition que, pour la préparation du produit d'addition éther di- ou tri-glycidylique/polyamine, on ait mis en réaction 2 à 10 équivalents NH de polyamine pour un équivalent époxy de l'éther di- ou tri-glycidylique, et le liant a base azotée présente un indice d'amine NH de 50 à 150 mg de KOH/g ainsi qu'une viscosité de 1 à 6000 mPa.s, mesurée à 150°C en solution dans l'isodécanol à une teneur en matières solides de 88 ± 1.

2. Composition de revêtement selon la revendication 1, caractérisée en ce qu'on utilise, en tant que polyamine pour la préparation du produit d'addition éther di- ou tri-glycidylique/polyamine, le n-hexane-1,6-diamine, la 4,7-dioxadécane-1,10-diamine ou la 4,9-dioxadodécane-1,12-diamine.

3. Composition de revêtement selon la revendication 1, caractérisée en ce qu'on utilise, en tant qu'acide dicarboxylique et/ou ester d'acide dicarboxylique pour la préparation du liant à base azotée, un acide gras dimérisé.

4. Composition de revêtement selon la revendication 1, caractérisée en ce que le liant à base azotée contient dans sa structure interne des groupements sulfonate à raison de 0,01 a 1,5 %.

5. Composition selon les revendications 1 et 4, caractérisée en ce qu'on utilise en tant qu'agent de réticulation une résine d'aminoplaste faiblement methylolée et fortement éthérifiée, et en tant que résine phénoplaste un phénol methylolé qui est éthérifié sur le groupement OH phénolique par l'alcool allylique, ou un mono, di ou polyphénol méthylolé dont les groupements méthylol sont au moins partiellement étherifiés.

6. Utilisation de la composition de revêtement selon l'une des revendications précédentes après protonation par des acides, comme liant pour le trempage électrophorétique cathodique de pièces métalliques.

**Revendications** pour l'Etat Contractant: AT

1. Procédé de préparation d'une composition de revêtement thermodurcissable, par combinaison de 50 à 80 % en poids, par rapport aux liant et agent de réticulation, d'un liant à base azotée, diluable dans l'eau par protonation avec des acides, qui a été préparé par réaction d'une résine polyépoxyde avec une polyamine et amidation ultérieure d'une partie des groupements amino, et de 20 à 50 % en poids d'un agent de réticulation à base d'un amino- et/ou phénoplaste ainsi éventuellement que des pigments, des charges, des inhibiteurs de corrosion, des catalyseurs, des antioxydants ou d'autres adjuvants de laque, et des solvants organiques à raison de jusqu'à 40 % par rapport au poids total de la composition de revêtement, caractérisé en ce qu'an met en réaction, en tant que liant à base azotée, un produit de réaction d'un acide dicarboxylique et/ou d'un ester d'acide dicarboxylique, l'acide dicarboxylique ou son ester pouvant éventuellement être partiellement remplacé par un acide monocarboxylique et/ou un ester d'acide monocarboxylique, au d'un oligomère ou polymère de (méth)acrylate avec un produit d'addition d'un éther di- ou tri-glycidylique et d'une polyamine, ladite polyamine contenant au moins deux atomes d'azote amino par molécule et au moins une chaîne alkylène avec au moins 3 atomes de carbone entre les groupements amino, à la condition que, pour la préparation du produit d'addition éther di- ou tri-glycidylique/polyamine, on ait mis en réaction 2 à 10 équivalents NH de polyamine pour un équivalent époxy de l'éther di- ou tri-glycidylique, et le liant à base azotée présente un indice d'amine NH de 50 à 150 mg de KOH/g ainsi qu'une viscosité de 1 à 6000 mPa.s, mesurée à 150°C en solution dans l'isodécanol à une teneur en matières solides de 88 ± 1 %.

2. Procédé selon la revendication 1, caractérisé en ce qu'on utilise, en tant que polyamine pour la préparation du produit d'addition éther di- ou tri-glycidylique/polyamine, le n-hexane-1,6-diamine, la 4,7-dioxadécane-1,10-diamine ou la 4,9-dioxadodécane-1,12-diamine.

3. Procédé selon la revendication 1, caractérisé en ce qu'on utilise, en tant qu'acide dicarboxylique et/ou ester d'acide dicarboxylique pour la préparation du liant à base azotée, un acide gras dimérisé.

4. Procédé selon la revendication 1, caractérisé en ce que le liant à base azotée contient dans sa structure interne des groupements sulfonate à raison de 0,01 à 1,5 %.

5. Procédé selon les revendications 1 et 4, caractérisé en ce qu'on utilise en tant qu'agent de réticulation une résine d'aminoplaste faiblement méthylolée et fortement éthérifiée, et en tant que résine phénoplaste un phénol méthylolé qui est éthérifié sur le groupement OH phénolique par l'alcool allylique, ou un mono, di ou polyphénol dont les groupements méthylol sont au moins partiellement éthérifiés.

6. Procédé de trempage électro-phorétique cathodique de pièces métalliques, caractérisé en ce qu'on utilise comme liant une composition de revêtement thermodurcissable qui a été préparée selon l'une quelconque des revendications précédentes et a subi une protonation par des acides.